**Europäisches Patentamt**

(19) **European Patent Office**

**Office européen des brevets**

(11) Veröffentlichungsnummer: **0 286 810 B1**

(12) **EUROPÄISCHE PATENTSCHRIFT**

(45) Veröffentlichungstag der Patentschrift:
13.06.90

(51) Int. Cl.⁵: **F16K 1/34**

(21) Anmeldenummer: 88102854.2

(22) Anmeldetag: 26.02.88

(54) Verfahren zum Herstellen eines Ventils, insbesondere eines thermostatischen Ventils.

(30) Priorität: 08.04.87 DE 3711885

(43) Veröffentlichungstag der Anmeldung:
19.10.88 Patentblatt 88/42

(45) Bekanntmachung des Hinweises auf die Patenterteilung:
13.06.90 Patentblatt 90/24

(84) Benannte Vertragsstaaten:
DE ES FR GB IT SE

(56) Entgegenhaltungen:
EP-A- 0 102 076
DE-A- 3 409 505
FR-A- 2 126 858
GB-A- 1 210 033
US-A- 1 352 735
US-A- 4 030 142
US-A- 4 492 253

(73) Patentinhaber: Gustav Wahler GmbH u. Co,
Hindenburgstr. 146, D-7300 Esslingen(DE)

(72) Erfinder: Wahler, Hans, Dipl.-Ing., Hölderlinweg 136,
D-7300 Esslingen(DE)

(74) Vertreter: Kratzsch, Volkhard, Dipl.-Ing.,
Mülbergerstrasse 65, D-7300 Esslingen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Herstellen eines Ventils, insbesondere eines thermoplastischen Ventils, der im Oberbegriff des Anspruchs 1 genannten Art.

Es sind Ventile bekannt (DE-A 3 409 505), bei denen die Ventilplatte aus zumindest zwei Komponenten besteht, und zwar einem tragenden Kern z.B. aus Metall und einer den Kern umhüllenden dichtenden Schicht aus einer relativ weichen Substanz, für die z.B. ein gummielastisch vernetztes Polyurethan verwendet wird.

Bei der Herstellung der Ventilplatte wird zunächst der metallische Kern gefertigt und dann die zur Umhüllung des Kernes bestimmte Schicht in flüssigen oder teigigen Zustand gebracht.

Diese Schicht, die in Verbindungskontakt mit dem Kern der Ventilplatte gelangt, ist dann in der Lage, bei geregelter Temperatur auszuhärten. Bekannt sind ferner Ventile (EP-A 102 076 bei denen das Ventilverschlußglied aus einer doppelten Metallscheibe besteht, wobei der zentrale Teil einer Metallscheibe etwa kegelförmig gestaltet ist und wobei diese doppelte Metallscheibe mit einer Gummihülle überzogen ist, die die der Ventildurchflußöffnung abgewandte Seite des Ventiltellers mit einem Schulterrand übergreift. Die Montage erfolgt so, daß zunächst ein Betätigungsstößel an der Metallscheibe angebracht und dann die Gummihülle an der Metallscheibe angebracht wird.

Es ist ferner eine Ventilscheibe bekannt (GB-A 1 210 033), die aus miteinander verbundenen Schichten besteht, wobei eine oberseitige Metallschicht und eine unterseitige Metallschicht vorgesehen sind, zwischen denen sich eine Schicht aus elastischem Material befindet.

Vor allem bei solchen Ventilen, bei denen das Ventilverschlußglied zumindest auf dem Flächenbereich, der mit der Ventildurchflußöffnung zusammenwirkt, eine Schicht aus elastischem Material trägt, ist die Herstellung des Ventilverschlußgliedes relativ aufwendig und teuer. So muß bei der Methode gemäß DE-A 3 409 505 zunächst der metallische Teller fertig geformt und bearbeitet sein, bevor die Umhüllung in flüssigem oder teigigem Zustand aufgebracht werden kann, die dann aushärten soll. Vor dem Aufbringen ist u.U. auch noch eine aufwendige Vorbehandlung der Oberfläche notwendig, z.B. Sandstrahlen, Vorbehandeln mit Ätzmitteln od. dgl. Außerdem bedarf es einer für diese Herstellungsmethode geeigneten, an die Abmessungen des zu schaffenden Ventilverschlußgliedes angepaßten, kostenaufwendigen Form, z.B. Mehrfachform. Auch die Methode gemäß EP-A 102 076 ist aufwendig, da auch hierbei zunächst die Metallscheibe fertig geformt und bearbeitet und mit dem der Betätigung dienenden Ventilstößel verbunden werden muß.

Die aufzubringende Hülle aus elastischem Material muß ebenfalls in einem separaten Herstellungsverfahren form- und maßgenau gefertigt werden und zum Aufziehen auf den Ventilteller bereitgehalten werden.

Der Erfindung liegt die Aufgabe zugrunde, ein Verfahren zum Herstellen eines Ventils, insbesondere eines thermostatischen Ventils, der im Oberbegriff des Anspruchs 1 genannten Art zu schaffen, das eine einfachere und kostengünstigere Gestaltung des Ventilverschlußgliedes ermöglicht.

Die Aufgabe ist bei einem Verfahren der eingangs genannten Art gemäß der Erfindung durch die Merkmale im Kennzeichnungsteil des Anspruchs 1 gelöst. Dadurch ergibt sich bei der Herstellung des Ventilverschlußgliedes eine wesentliche Vereinfachung und Kostenreduzierung. Es entfällt ein kosten- und zeitaufwendiges separates Beschichten des fertig hergestellten Ventiltellers mit allen eingangs dargelegten Nachteilen, die damit sonst noch verbunden sind.

Weitere vorteilhafte Ausgestaltungen der Erfindung ergeben sich aus den Ansprüchen 2–4. Auf diese Weise ist eine besonders einfache und kostengünstige Herstellung möglich.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben.

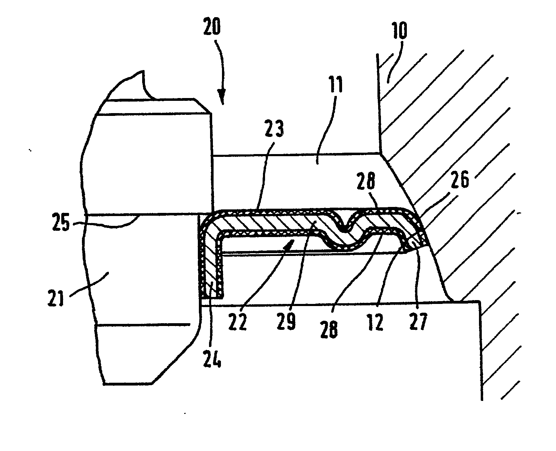

Die Erfindung ist nachfolgend anhand eines in der Zeichnung gezeigten Ausführungsbeispieles näher erläutert.

Die Zeichnung zeigt einen schematischen, axialen Längsschnitt von Teilen eines Ventilgehäuses mit eingesetztem thermostatischen Ventil.

In einem Ventilgehäuse 10 ist ein thermostatisches Ventil 20 herkömmlicher Art angeordnet, das auf der äußeren Umfangsfläche eines Gehäuseabschnittes 21 ein Ventilverschlußglied 22 trägt. das hier aus einem Ventilteller 23 besteht. Der Ventilteller 23 sitzt mit einem Zylinderabschnitt 24 auf dem Gehäuseabschnitt 21 und stützt sich an einer axialen Schulter 25 in der einen Richtung ab. Das Ventilgehäuse 10 enthält eine zum Ventil 20 koaxiale und etwa ringförmige Ventildurchflußöffnung 11, die hier etwa kegelstumpfförmig verläuft und eine innere Anlagefläche 12 bildet, an der das Ventilverschlußglied 22 in der gezeigten Schließstellung mit einer zugeordneten Schließfläche 26 zur Anlage kommt. Die Schließfläche 26 ist hier durch die Außenfläche eines zum Zylinderabschnitt 24 konzentrischen äußeren Randteiles 27 gebildet.

Das so gestaltete Ventilverschlußglied 22 ist aus einem Rohteil hergestellt, das zumindest auf der in der Zeichnung oben befindlichen Seite mit einer Schicht 28 aus einem elastischen Material beschichtet ist und das in diesem beschichteten Zustand mittels der üblichen Fertigungsmethoden zum fertigen Ventilverschlußglied 22 verarbeitet worden ist. Das Rohteil besteht hier z.B. aus einem metallischen Träger 29, der vor der Herstellung des Ventilverschlußgliedes 22 in Form eines Bandes, einer Platte oder eines Streifenmaterials vorliegt, das zumindest auf der einen Seite mit der Schicht 28, beim gezeigten Ausführungsbeispiel auf beiden Seiten mit einer Schicht 28, aus diesem elastischen Material beschichtet ist und aus dem mittels Stanzen, Prägen, Biegen, Stanzprägen od. dgl. das Ventilverschlußglied 22 in der gezeigten fertigen Form gebildet ist. Das elastische Material der Schicht 28 besteht insbesondere aus einem Elastomer, z.B. Gummi, Kunstgummi oder dergleichen.

Somit liegt das Ventilverschlußglied 22 in der gezeigten Schließstellung mit der äußeren Schließfläche 26 am äußeren Randteil 27 elastisch an der inneren Anlagefläche 12 an, wobei das Ventilverschlußglied 22 unter elastischer Deformation der Schicht 28 in diesem Bereich angepreßt ist und dadurch eine besonders zuverlässige und gute Abdichtung in diesem Bereich gewährleistet ist.

Bei der Herstellung des Ventilverschlußgliedes 22 geht man somit von einem bandförmigen oder plattenförmigen Rohteil aus, das z.B. aus einem metallischen Träger 29 besteht, der auf beiden Seiten mit der Schicht 28 aus elastischem Material beschichtet ist. Dieses Rohteil wird hiernach durch Stanzen, Prägen, Biegen, Stanzprägen oder dergleichen zum fertigen Ventilverschlußglied 22 verarbeitet.

Durch das so gestaltete Ventilverschlußglied 22 ist das Ventil 20 besonders kostengünstig.

## Patentansprüche

1. Verfahren zum Herstellen eines Ventils (20), insbesondere eines thermostatischen Ventils, dessen Ventilverschlußglied (22) eine Ventildurchflußöffnung (11) im Ventilgehäuse (10) beherrscht und zumindest auf dem mit der Ventildurchflußöffnung zusammenwirkenden Flächenbereich eine Schicht (28) aus einem elastischen Material trägt, dadurch gekennzeichnet, daß das Ventilverschlußglied (22) folgendermaßen hergestellt wird:
   a) ein plattenförmiges Rohteil, das aus einem Träger (29) besteht, wird zumindest auf einer Seite mit einer Schicht (28) aus elastischem Material beschichtet, und
   b) aus diesem beschichteten Rohteil wird mittels Stanzen, Prägen, Biegen, Stanzprägen od. dgl. das Ventilverschlußglied (22) in der fertigen Form hergestellt.

2. Verfahren nach Anspruch 1, dadurch gekennzeichnet, daß man ein plattenförmiges Rohteil verarbeitet, das einen metallischen Träger (29) hat.

3. Verfahren nach Anspruch 1 oder 2, dadurch gekennzeichnet, daß man ein plattenförmiges Rohteil verarbeitet, dessen Träger (29) auf beiden Seiten mit einer Schicht (28) aus elastischem Material beschichtet ist.

4. Verfahren nach einem der Ansprüche 1–3, dadurch gekennzeichnet, daß man ein plattenförmiges Rohteil verarbeitet, dessen Träger (29) mit einer elastischen Schicht aus einem Elastomer, z.B. Gummi, Kunstgummi od. dgl. beschichtet ist.

## Revendications

1. Procédé de fabrication d'une vanne (20), d'une vanne thermostatique notamment, dont l'organe d'obturation (22) contrôle un orifice de passage (11), pratiqué dans un corps de vanne (10), et supporte, sur la zone superficielle du moins, qui concourt avec l'orifice de passage, une couche (28) composée d'un matériau élastique, caractérisé en ce que l'organe d'obturation (22) est réalisé comme suit:
   a) une ébauche en forme de plaque, composée d'un support (29), est enduite, sur l'une de ses faces du moins, d'une couche (28) en matériau élastique,
   b) à partir de cette ébauche, ainsi enduite, l'organe d'obturation (22) est réalisé sous sa forme finie, par découpage, cambrage, cintrage, estampage ou autres.

2. Procédé suivant la revendication 1, caractérisé par le formage d'une ébauche en forme de plaque, qui présente un support métallique (29).

3. Procédé suivant l'une des revendications 1 et 2, caractérisé par le formage d'une ébauche en forme de plaque, dont le support (29) est enduit sur ses deux faces d'une couche (28) en matériau élastique.

4. Procédé suivant l'une quelconque des revendications 1 à 3, caractérisé par le formage d'une ébauche, dont le support (29) est enduit d'une couche élastique composée d'un élastomère, caoutchouc, caoutchouc synthétique ou autres, par exemple.

## Claims

1. Method for the production of a valve (20), especially a thermostatic valve, the valve closure member (22) of which governs a valve through-flow opening (11) in the valve housing and carries, at least on the surface region co-operating with the valve through-flow opening, a coating (28) of an elastic material, characterised in that the valve closure member (22) is produced as follows:
   a) a rough part of plate form, which consists of a carrier (29), is coated at least on one side with a coating (28) of elastic material, and
   b) the valve closure member (22) is produced in the final form from this coated rough part by means of stamping, embossing, bending, stamp-swaging or the like.

2. Method according to Claim 1, characterised in that a rough part of plate form is processed, which has a metallic carrier (29).

3. Method according to Claim 1 or 2, characterised in that a rough part of plate form is processed, the carrier (29) of which is coated on both sides with a coating (28) of elastic material.

4. Method according to one of Claims 1–3, characterised in that a rough part of plate form is processed, the carrier (29) of which is coated with an elastic coating of an elastomer, for example rubber, artificial rubber or the like.